# EUROPÄISCHE PATENTSCHRIFT

(11) **EP 0 454 799 B1**
(45) Veröffentlichungstag und Bekanntmachung des Hinweises auf die Patenterteilung: **22.09.1993**
(21) Anmeldenummer: 90915292.8
(22) Anmeldetag: 24.10.1990
(51) Int. Cl.: F02M 59/46

(54) **DRUCKVENTIL**
PRESSURE VALVE
SOUPAPE DE REFOULEMENT

(30) Priorität: 13.11.1989 DE 3937708
(43) Veröffentlichungstag der Anmeldung: 06.11.1991
(73) Patentinhaber: ROBERT BOSCH GMBH, 70442 Stuttgart (DE)
(72) Erfinder: OBERL, Johann, D-7141 Murr (DE); SCHMIDT, Hermann, D-7410 Reutlingen 24 (DE); LUTZ, Rolf, D-7411 Rommelsbach (DE)
(86) Internationale Anmeldenummer: DE9000802
(87) Internationale Veröffentlichungsnummer: WO9107586

(56) Entgegenhaltungen:
- WO-A-90/02875
- DE-A- 3 141 850
- DE-A- 3 644 595
- DE-B- 1 019 128
- FR-A- 877 778
- US-A- 2 792 846

## Beschreibung

### Stand der Technik

Die Erfindung geht von einem Druckventil nach der Gattung des Hauptanspruchs aus (DE-A- 3 644 595). Bei einem durch die DE-AS 1 236 863 bekannten Druckventil ist der Rücksaugbund durch eine Ringnut von dem Bund getrennt, der wenigstens eine Ausnehmung, im vorliegenden Falle zwei, aufweist. Diese Ausnehmung ist als Anschliff ausgeführt und verbleibt in jeder Stellung des Schließgliedes des Druckventils innerhalb der Durchgangsbohrung. Das Schließglied hat eine kegelförmige Dichtfläche am pumpenarbeitsraumseitigen Ende und auf der Federraumseite einen festen Anschlag, an den es bei einer sehr weich ausgeführten Druckfeder mit jedem Öffnungshub des Schließgliedes zur Anlage kommt. Die am Schließglied vorgesehene Ausnehmung, die somit immer einen konstanten Durchströmquerschnitt aufweist, ist als Drosselquerschnitt ausgebildet. Die Aufgabe dieses Drosselquerschnitts ist es, daß das Druckventilschließglied am Ende der Einspritzung nach Schließen der Einspritzdüse schneller in seine Schließstellung bewegt wird, da die in der Förderleitung reflektierten Druckwellen am Drosselquerschnitt einen Durchströmwiderstand finden, der sich als Schließkraft auf das Schließglied in Unterstützung der Druckfeder auswirkt. Aufgrund der unterschiedlichen Förderraten bzw. Fördergeschwindigkeit des Brennstoffs durch das Druckventil bzw. die Förderleitung bei Leerlaufbetrieb einerseits und Vollastbetrieb bei hoher Drehzahl andererseits ergibt sich, daß die Auswirkung der Drosselstelle auf die Schließbewegung des Schließgliedes in Richtung Leerlaufbetrieb abnimmt, da die Druckwelle verhältnismäßig schwach ausgebildet ist, der Drosselquerschnitt dieser Druckwelle also einen geringeren Widerstand entgegensetzt und über die Zeiteinheit mehr Kraftstoff durch die Drossel abfließen kann. Dementsprechend wird das Schließglied langsamer geschlossen und es wird demgemäß bei Leerlaufbetrieb ein größerer Anteil des durch das schließende Ventil freigegebenen Volumens der Förderleitung durch Kraftstoff aus dem Pumpenarbeitsraum ersetzt als dies bei Vollast- oder Teillastbetrieb der Fall ist, so daß sich die Druckminderung in der Förderleitung von einem geringsten Betrag bei Leerlaufbetrieb bis zu einem größten Betrag bei Vollastbetrieb verändert.

Ein solches Druckventil dient somit der Steuerung des Restdruckes in der Förderleitung und Angleichung der Kraftstoffördermenge in Abhängigkeit von der Einspritzmenge und der Drehzahl. Die beim Absteuerstoß wirksame Drossel wirkt sich zugleich während der Förderphase der Kraftstoffeinpritzpumpe auf die Einspritzrate aus und verringert die Kraftstoffeinspritzmenge bei Vollast mit zunehmender Drehzahl.

Bei durch die DE-A-36 44 595 bekannten Druckventilen, bei denen das Schließglied einen Rücksaugbund aufweist und die nicht bei jedem Fördervorgang an einen festen Anschlag laufen, ist der dem Rücksaugbund pumpenarbeitsraumseitig sich anschließende, vom Schließglied freigelassene Durchgangsquerschnitt in der Durchgangsbohrung sehr groß ausgeführt, insbesondere größer als der freie Querschnitt der sich anschließenden Förderleitung. Bei solchen Ventilen geben sich stark unterschiedliche Einspritzmengen bei konstant eingestellter Hochdruckförderung der Kraftstoffeinspritzpumpe. Diese unterschiedlichen Kraftstoffeinspritzmengen können insbesondere bei einer Verteilereinspritzpumpe nicht durch entsprechende Einstellung des wirksamen Förderhubes des Pumpenkolbens korrigiert werden, da alle Einspritzstellen der Brennkraftmaschine von einem einzigen Pumpenarbeitsraum im Wechsel versorgt werden und dementsprechend die Mengensteuerung für alle Einspritzstellen gleich sein muß, vorausgesetzt, daß nicht eine Einspritzmengensteuereinrichtung verwirklicht wird, die die Einspritzmenge pro Fördertakt des Pumpenkolbens individuell steuert. Eine solche Steuerung ist jedoch mit einem erheblichen Aufwand verbunden. Eine Mengenbeeinflussung kann auch durch andere sekundäre Maßnahmen vorgenommen werden, wie z. B. Hubbegrenzungen des Druckventils, was aber wiederum nicht den über den gesamten Betriebsbereich der Kraftstoffeinspritzpumpe erwünschten gleichmäßigen Effekt ergibt und zudem ebenfalls sehr aufwendig ist.

### Vorteile der Erfindung

Das erfindungsgemäße Druckventil mit den kennzeichnenden Merkmalen des Hauptanspruchs hat demgegenüber den Vorteil, daß die vorerwähnten Mengenstreuungen mit einer einfachen Maßnahme verhindert werden können. Insbesondere wird, dabei das Öffnungsverhalten des Druckventilschließgliedes beeinflußt. Bei einem Druckventilschließglied, das in bekannter Weise den Rücksaugbund und einen sich anschließenden sehr großen Durchtrittsquerschnitt pumpenarbeitsraumseitig aufweist, wird mit dem Austauchen des Rücksaugbundes aus dem Durchgangskanal ein ringförmiger Verbindungsquerschnitt aufgesteuert, der bei wenigen Zehntel Millimetern des Austauchhubes bereits einen Querschnitt freigibt, der größer ist als der freie Querschnitt der sich anschließenden Förderleitung. Durch den Öffnungsvorgang ergibt sich daraus ein Überschwingen des Öffnungshubes in Richtung eines größeren Verbindungsquerschnittes als es für die Förderung der derzeit bestehenden Förderrate notwendig wäre. Anschließend schwingt aufgrund des Druckaufbaues in der Förderleitung das Druckventil wieder zurück und unterbindet die Förderung solange bis es wieder aufgestoßen wird. Aufgrund dieses Schwingvorganges ergeben sich Einbrüche in der Fördercharakteristik über die Förderdauer des jeweiligen Förderhubes des Pumpenkolbens bzw. über die Einspritzdauer. Je nach Auslegung der Förderstrecke an den einzelnen Einspritzstellen ergeben sich hieraus unterschiedliche Mengenverteilungen und zudem auch unterschiedlich, gewellte Mengenverläufe mit wechselnder Förderrate über der Drehzahl, was zu Beanstandungen führt. In der erfindungsgemäßen Ausgestaltung wird das Überschwingen dadurch vermieden, daß der Verbindungsquerschnitt zwischen Pumpenarbeitsraum und Förderleitung langsamer und mit zunehmender Förderrate kontinuierlich geöffnet wird, so daß bei der Förderung Druckspitzen und Drucksenkungen vermieden werden, die beim Druckventil gemäß dem Stand der Technik zu dem welligen Mengenverlauf geführt haben. Dabei stellt die Ausnehmung insgesamt keinen Drosselquerschnitt dar, da der freie Durchschnittsquerschnitt mit zunehmender Förderrate vergrößert werden kann und der Durchgangsquerschnitt und damit der maximale Verbindungsquerschnitt ungefähr gleich groß ist wie der freie Querschnitt der Förderleitung. Durch die am Umfang des Schließglieds gleichmäßig verteilten und sich über die restliche Länge ab Rücksaugbund erstreckenden Ausnehmungen wird eine kraftausgeglichene Lagerung mit leichtgängiger Führung in jeder Hublage des Schließglieds erzielt, so daß eine einseitige Abnutzung sowie Kavitation und eine Funktionsbeeinträchtigung nach längerer Betriebszeit verhindert wird.

### Zeichnung

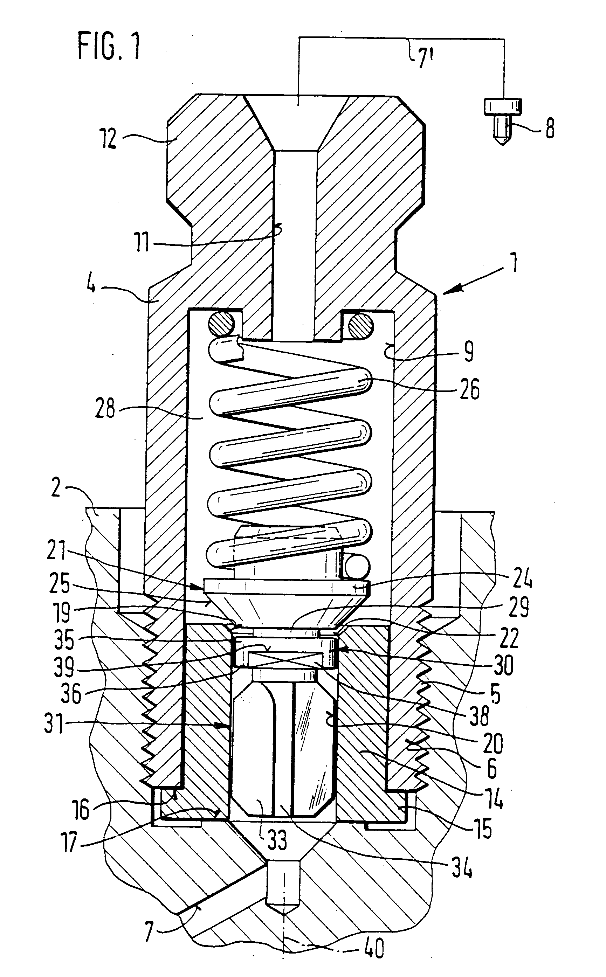

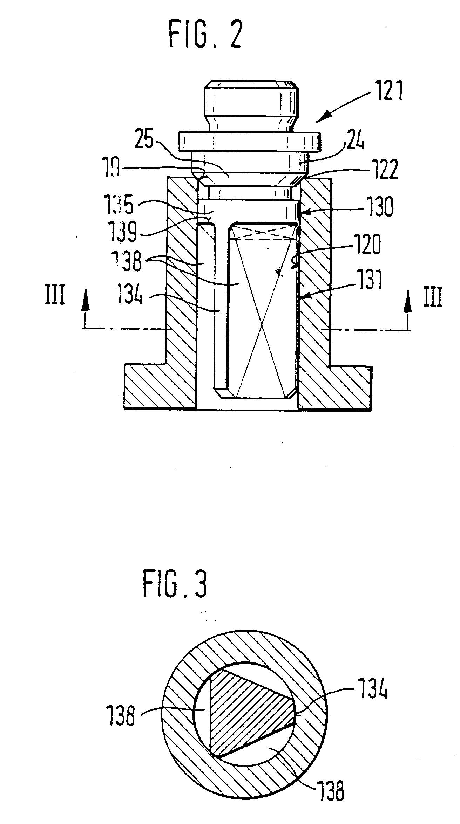

Ein Ausführungsbeispiel der Erfindung ist in der Zeichnung dargestellt und wird in der nachfolgenden Beschreibung näher erläutert. Es zeigen Figur 1 ein bekanntes Druckventil, Figur 2 ein Ausführungsbeispiel des erfindungsgemäßen Druckventils und Figur 3 einem Schnitt entlang der Linie II-II durch das Ausführungsbeispiel nach Figur 2.

### Beschreibung der Ausführungsbeispiele

Die Figur 1 zeigt einen Längsschnitt durch ein durch die WO 90/0 2875 bekanntes Druckventil 1, das in das Gehäuse 2 einer nicht weiter dargestellten Kraftstoffeinspritzpumpe eingeschraubt ist. Das Druckventil 1 weist einen Anschlußstutzen 4 auf, der an seinem einen Ende ein Außengewinde 5 hat und mit diesem in eine Gewindebohrung 6 im Gehäuse 2 eingeschraubt ist. Koaxial mündet in die Gewindebohrung vom nicht weiter dargestellten Pumpenarbeitsraum der Kraftstoffeinspritzpumpe her eine Förderleitung 7. Diese hat über das Druckventil 1 eine Verbindung zu einer weiterführenden Förderleitung 7', an deren Ende ein Einspritzventil 8 angeschlossen ist. Der Anschlußstutzen 4 ist im wesentlichen zylindrisch aufgebaut und hat eine axiale zylindrische Ausnehmung 9, die zur Einschraubseite hin offen ist. Koaxial zur zylindrischen Ausnehmung 9 geht von dieser eine Anschlußbohrung 11 ab, die in einem Anschlußnippel 12 des Anschlußstutzens mündet und die Ausnehmung 9 mit der Förderleitung 7' bzw. dem Einspritzventil 8 verbindet.

Vom pumpenarbeitsraumseitigen Ende her ist in die axiale Ausnehmung 9 ein rohrförmiger Ventilsitzkörper 14 eingesetzt, der an seinem pumpenarbeitsraumseitigen Ende einen Flansch 15 aufweist, über den er durch die pumpenarbeitsraumseitige Stirnseite 16 des Anschlußstutzens an einer Schulter 17 am Grund der Gewindebohrung 6 gehalten wird. Der Ventilsitzkörper 14 hat einen axialen Durchgangskanal 20, der an seinem Austritt zur Seite der Ausnehmung 9 eine Austrittskante 22 bildet, die in einen kegelförmigen Ventilsitz 19 übergeht. In den Durchgangskanal wird ein Ventilschließglied 21 des Druckventils geführt, das einen kopf 24 aufweist, der eine kegelförmige Dichtfläche 25 hat, die bei Eintauchen des Ventilschließgliedes in den Durchgangskanal 20 zur Anlage an den Ventilsitz kommt. Der Kopf 24 des Ventilschließgliedes wird von der Kraft einer Druckfeder 26 beaufschlagt, die sich an der Stirnseite der Ausnehmung 9 abstützt und bestrebt ist, das Ventilschließglied in Schließstellung bzw. Anlage am Ventilsitz zu halten. Der Kopf des Ventilschließgliedes zusammen mit dem Ventilsitzkörper schließen somit in der Ausnehmung 9 einen Federraum 28 ein. Der Ventilsitz kann aber auch am pumpenarbeitsraumseitigen Ende des Durchgangskanals 20 angeordnet sein, wobei dann die Dichtflächen an dem entsprechenden Ende des Ventilglieds ausgebildet ist.

Die Dichtfläche 25 am Kopf des Ventilschließgliedes wird pumpenarbeitsraumseitig durch eine Ringnut 29 begrenzt, die andererseits an einem Bund 30 angrenzt. Dieser ist der Bohrung des Durchgangskanals im Durchmesser so angepaßt, daß er im Durchgangskanal dichtbleibend verschiebbar ist. An den Bund schließt sich pumpenarbeitsraumseitig ein Führungsteil 31 an, der durch Aussparungen 33 gebildete Führungsrippen 34 aufweist, die in dem Durchgangskanal 20 gleiten und eine kippfreie Bewegung des Ventilschließgliedes gewährleisten. Zwischen den Führungsrippen bilden die Aussparungen Durchlaßquerschnitte für Kraftstoff, der über die Förderleitung 7 in den Durchgangskanal 20 zum Bund 30 gelangt.

Der Bund 30 wird als Rücksaugbund oder als Entlastungsbund bezeichnet. Erfolgt vom Pumpenarbeitsraum her eine Hochdruckförderung, so wird der Querschnitt des Ventilschließgliedes 21 von dem Hochdruck beaufschlagt und das Ventilschließglied entgegen der Kraft der Druckfeder 26 verschoben. Dabei taucht der Bund 30 aus dem Durchgangskanal 20 aus und verdrängt zugleich bereits Kraftstoff in die Förderleitung 7' unter Erhöhung des dort herrschenden Restdruckes vor dem Einspritzventil 8. Bei Überschreiten eines bestimmten, durch den Öffnungsdruck des Einspritzventils gegebenen Druckes folgt die Kraftstoffeinspritzung. Bei ausgetauchtem Bund 30 kann der Kraftstoff an einem ringförmig gebildeten Vebindungsquerschnitt vorbei in den Federrraum 28 und weiter zum Einspritzventil strömen. Bei Beendigung der Einspritzphase wird der Druck im Pumpenarbeitsraum abgesenkt. Dabei kehrt das Schließglied 21 unter Einwirkung der Druckfeder einerseits und dem in der Förderleitung 7' bzw. im Federraum 28 herrschenden Druck in seine Schließstellung zurück. Dabei taucht der Bund 30 an der Austrittskante 22 vorbei in den Durchgangskanal 20 ein und vergrößert dabei den ab dem Überdecken des ersten pumpenarbeitsraumseitigen Teils des Bundes 30 mit der Austrittskante 22 das zwischen Druckventilschließglied und Einspritzventil dann eingesperrte Volumen unter gleichzeitiger Druckentlastung. Diese Arbeitsweise ist bekannt und braucht hier nicht näher beschrieben werden.

Der Bund 30 ist unterteilt in einen Rücksaugbund 35 und einen Steuerbund 36. Der Steuerbund weist an seinem Umfang eine Ausnehmung 38 auf inform eines Anschliffes, deren zum Kopf 24 weisende Begrenzungskante parallel zur Austrittskante 22 liegt und die Höhe des Steuerbundes 36 bestimmt. Im übrigen geht der Steuerbund 36 nahtlos in den Rücksaugbund 35 über.

Die Ausnehmung 38 bildet einen Durchgangsquerschnitt, der kompakt ausgebildet ist durch einseitige Anbringung der Ausnehmung 38 am Steuerbund 36.

Bei dem hier beschriebenen Druckventil wird der Verbindungsquerschnitt zwischen der Förderleitung 7 und Förderleitung 7' durch den Austauchgrad des Steuerbundes 36 aus dem Durchgangskanal 20 bestimmt. Bei Anheben des Schließgliedes gibt die Austrittskante 22 zunehmend einen Verbindungsquerschnitt frei, der aus dem Produkt von Austauchhub und der Länge der durchgangskanalseitigen Begrenzung der Ausnehmung 38 bestimmt ist. Beim Öffnen des Druckventils wird somit mit einem durch den Durchgangsquerschnitt 38 beeinflußten Hub der zur ungehinderten Förderung notwendige Verbindungsquerschnitt zwischen den Förderleitungsabschnitten 7 und 7' hergestellt. Der Durchlaßquerschnitt, der zwischen Ausnehmung und Durchgangskanal 20 gebildet wird, ist so klein wie möglich aber so groß, daß der Kraftstoff bei der höchsten Förderrate so ungehindert durchfließen kann, wie das auch bei der entsprechenden dimensionierten Förderleitung der Fall ist. Das bedeutet, daß der maximale Durchgangsquerschnitt am Steuerbund etwa gleich groß ist wie der Durchtrittsquerschnitt der Förderleitung 7'. Dabei muß das Druckventilschließglied einen höheren Hub zurücklegen als dies beim Druckventil nach DE-A-123 6 863 erforderlich war. Die Höhe des Steuerbundes ist so bemessen, daß ein Teil desselben ständig innerhalb des Durchgangskanals 20 verbleibt und somit sicher ein gewünschter maximale Durchgangsquerschnitt erhalten bleibt. Durch diese Ausgestaltung wird gewährleistet, daß die höchste Kraftstoffeinspritzmenge ungehindert zur Einspritzstelle gelangt und daß der Verbindungsquerschnitt der jeweilig herrschenden Förderrate so angepaßt ist, daß ein Überschwingen vermieden wird. Durch die zur Steuerung des Durchgangsquerschnitt notwendigen relativ großen Hübe wirkt sich ein leichtes Pendeln des Druckventilschließgliedes nicht mehr wesentlich auf die Kraftstoffeinspritzmenge bzw. den Einspritzmengenverlauf aus.

In der erfindungsgemäßen Weiterbildung der Ausgestaltung gemäß Figur 1 in Figur 2 weist das Druckventilschließglied 121 als Führungsteil 131 drei Führungsrippen 134 auf, die in gleichmäßigen Winkelabständen von 120 Grad zueinander angeordnet sind und von den Ausnehmungen 138 gebildet sind, die als achsparallele Anschliffe an einem ansonsten kreiszylindrischen Formkörper ausgestaltet sind. Dabei wird mit den Anschliffen 138 zugleich auch der Rücksaugbund 135 pumpenarbeitsraumseitig begrenzt mit einer der Begrenzungskante 39 von Figur 1 entsprechenden Begrenzungskante 139. Daran anschließend erstrecken sich die Ausnehmungen 138 über die ganze pumpenarbeitsraumseitige Länge des anschließenden Führungsteils 131, das hier zugleich die Funktion des Steuerbundes des Ausführungsbeispiels nach Figur 1 übernimmt. Die Ausnehmungen wirken gleicherweise wie bei Figur 1 mit der Austrittskante 122 des Durchgangskanals 120 zusammen mit den bereits zu Figur 1 beschriebenen Vorteilen.

Durch die gleichmäßige Verteilung der Ausnehmungen mit jeweils gleichgroßen Querschnitten ergibt sich eine ausgeglichene Kräftebilanz der hydraulischen, auf das Druckventilschließglied 121 wirkenden Kräfte. Dies würde auch bei einer anderen Anzahl von Ausnehmungen erreicht werden bei entsprechend gleichmäßiger Anordnung und Dimensionierung. Besonders günstig ist es aber, drei Ausnehmungen vorzusehen. Mit einer zunehmenden Anzahl von Ausnehmungen müßten die Durchtrittsquerschnitte entsprechend kleiner gestaltet werden, wobei sich in nachteiliger Weise zunehmend Drosselwirkungen ergeben. Ein Optimum an Kräfteausgleich wird mit den drei Ausnehmungen erzielt unter Beibehaltung der eingangs beschriebenen vorteilhaften Wirkungen. Auch hier ist die Summe der Querschnitte an den Ausnehmungen 135 vorteilhaft nie größer als der Durchgangsquerschnitt der Förderleitung.

Es kann bei bestimmtem Bedarf dem Anschliff bzw. den Ausnehmungen zusätzlich eine für sich bekannte drehzahlabhängig wirksame Angleichdrossel vorgeschaltet werden, um damit bei bestimmten konstruktiven Gegebenheiten der Einspritzanlage die Einspritzung in bezug auf einen gleichmäßigen Einspritzverlauf anzupassen. Dies kann z. B. in Form einer örtlichen Ausnehmung am Rücksaugbund 135 oder als eine einen Ringspalt bildende Durchmesserverringerung des Rücksaugbundes gegenüber dem Durchgangskanal verwirklicht werden.

Schließlich kann der Anschliff als in Richtung Pumpenarbeitsraum zunehmender Querschnitt derart ausgebildet werden, daß er über seine gesamte Länge vorzugsweise aber nur am Anfang wie gestrichelt in Figur 2 dargestellt, schräg verläuft und dann parallel zur Achse des Druckventilschließgliedes. Hiermit kann der Anstieg über Menge oder Durchfluß gesteuert werden und eine Angleichung erzielt werden. Der schräg verlaufende Anschliff kann dabei auch an nur einigen der drei Ausnehmungen vorgenommen werden.

## Patentansprüche

1. Druckventil zum Einbau in eine Förderleitung (7, 7') zwischen einem Pumpenarbeitsraum einer Kraftstoffeinspritzpumpe und einer Kraftstoffeinspritzstelle (8) an einer von der Kraftstoffeinspritzpumpe versorgten Brennkraftmaschine mit einem mit einem Ventilsitz (19) versehenen Ventilsitzkörper (14), der einen Durchgangskanal (20) aufweist, in dem ein Schließglied (21) des Druckventils (1) geführt ist, das eine Dichtfläche (25) aufweist, mit der es bei Schließstellung des Druckventils auf einen sich an den Durchgangskanal (20) anschließenden Ventilsitz (19) durch eine sich ortsfest in einem auf der dem Pumpenarbeitsraum abgewandten Seite des Schließglieds liegenden Federraum (28) abstützenden Druckfeder (26) gepreßt wird, das ferner einen Bund (135) hat, der dicht im Durchgangskanal (20) verschiebbar ist, bei in Schließstellung befindlichem Schließglied dort eingetaucht ist und beim Öffnen des Druckventils federraumseitig aus dem Durchgangskanal (120) austaucht und mit einem sich pumpenarbeitsraumseitig unmittelbar an den Bund (135) anschließenden Durchtrittsteil mit einem an den Durchmesser des Durchgangskanals angepaßten Durchmesser an dessen Umfang mehrere gleichmäßig verteilte sich über die gesamte Länge des Durchtrittsteils erstreckende Ausnehmungen (38) befinden, die mit der Wand des Durchgangskanals (20) einen Durchgangsquerschnitt bilden, und die Ausnehmungen mit einer den Durchgangskanal (20) federraumseitig begrenzenden Austrittskante (22) zusammen einen Verbindungsquerschnitt zwischen Pumpenarbeitsraum und Förderleitung (7) bilden, dadurch gekennzeichnet, daß die Ausnehmungen (138) jeweils einen gleich großen Durchgangsquerschnitt aufweisen, der Durchtrittsteil als Steuerbund (36) ausgebildet ist wobei der Durchtrittsquerschnitt der Ausnehmungen ungefähr so groß ist wie der Querschnitt der Förderleitung (7) und die Rückstellkraft zusammen mit dem gesamten Durchgangsquerschnitt so abgestimmt ist, daß mit zunehmender Kraftstofförderrate der Verbindungsquerschnitt durch Verschiebung des Schließgliedes (121) entgegen der Kraft der Druckfeder (26) vergrößert wird, wobei der Verbindungsquerschnitt immer kleiner oder höchstens gleich groß bleibt wie der gesamte Druchgangsquerschnitt.

2. Druckventil nach Anspruch 1, dadurch gekennzeichnet, daß bei maximaler Förderrate der Kraftstoffeinspritzpumpe immer ein Teil des Steuerbundes und der Länge der Ausnehmung (138) in dem Durchgangskanal (120) verbleibt.

3. Druckventil nach einem der vorstehenden Ansprüche 1 oder 2, dadurch gekennzeichnet, daß das Schließglied einen federraumseitigen Kopf (124) aufweist, an dem eine vorzugsweise kegelförmig verlaufende Dichtfläche (25) ausgebildet ist, die auf einen entsprechend ausgebildeten Ventilsitz (19) federraumseitig am Austritt des Durchgangskanals (120) durch die Druckfeder (26) zur Anlage bringbar ist und an einem sich an die Dichtfläche (25) anschließenden in den Durchgangskanal (120) tauchenden Teil des Schließglieds der Rücksaugbund (135) ausgebildet ist, und dem Rücksaugbund sich pumpenarbeitsraumseitig ein Führungsteil (131) anschließt, gebildet aus sich in Achsrichtung des Durchgangskanals (120) erstreckenden Ausnehmungen (138) an der Mantelfläche des Schließgliedes (121), zwischen denen Führungsrippen (134) gebildet sind.

4. Druckventil nach Anspruch 1 bis 3, dadurch gekennzeichnet, daß die Ausnehmungen als zur Achse des Schließglieds paralleler Anschliff ausgebildet sind.

5. Druckventil nach Anspruch 1 bis 3, dadurch gekennzeichnet, daß wenigstens eine der Ausnehmungen mit in Richtung Pumpenarbeitsraum zunehmendem Durchgangsquerschnitt ausgebildet ist.

6. Druckventil nach Anspruch 5 dadurch gekennzeichnet, daß wenigstens eine der Ausnehmungen gestuft mit in Richtung Pumpenarbeitsraum zunehmendem Durchgangsquerschnitt ausgebildet ist.

## Claims

1. Delivery valve for installation in a delivery conduit (7, 7') between a pump working space of a fuel injection pump and a fuel injection location (8) on an internal combustion engine supplied by the fuel injection pump, having a valve seat body (14) provided with a valve seat (19), which valve seat body (14) has a passage duct (20) in which is guided a closing element (21) of the delivery valve (1), which closing element (21) has a sealing surface (25) by means of which it is pressed, in the closed position of the delivery valve, onto a valve seat (19) adjacent to the passage duct (20) by a compression spring (26) supported at a fixed location in a spring space (28) located at the end, facing away from the pump working space, of the closing element, which closing element (21) also has a collar (135) which can be displaced in a sealed manner in the passage duct (20), is inserted there when the closing element is in the closed position and is withdrawn from the passage duct (120) at the spring-space end when the delivery valve is opened, and having an access part immediately adjacent, at the pump working space end, to the collar (135), which access part has a diameter matched to the diameter of the passage duct and, on its periphery, a plurality of equally distributed recesses (38) extending over the complete length of the access part, which recesses (38), together with the wall of the passage duct (20), form a passage cross-section, and, together with an outlet edge (22) bounding the passage duct (20) at the spring space end, form a connection cross-section between the pump working space and the delivery conduit (7), characterised in that the recesses (138) each have a passage cross-section of equal size, the access part is configured as a control collar (36), the access cross-section of the recesses being approximately as large as the cross-section of the delivery conduit (7) and the return force together with the total passage cross-section being matched in such a way that with increasing fuel delivery rate, the connection cross-section is increased by displacement of the closing element (121) against the force of the compression spring (26), the connection cross-section always remaining smaller than, or at most the same size as, the total passage cross-section.

2. Delivery valve according to Claim 1, characterised in that at the maximum delivery rate of the fuel injection pump, a part of the control collar and of the length of the recess (138) always remains in the passage duct (120).

3. Delivery valve according to one of the preceding Claims 1 or 2, characterised in that the closing element has, at the spring space end, a head (124) on which a preferably conically extending sealing surface (25) is configured, which sealing surface (25) can be brought into contact with a correspondingly configured valve seat (19) at the spring space end at the outlet from the passage duct (120) by the compression spring (26) and the reverse-suction collar (135) is configured on a part of the closing element which is inserted in the passage duct (120) and adjacent to the sealing surface (25), and a guide part (131) is adjacent to the reverse-suction collar at the pump working space end, the guide part being formed by recesses (138) on the outer surface of the closing element (121) extending in the axial direction of the passage duct (120), guide ribs (134) being formed between these recesses (138).

4. Delivery valve according to Claim 1 to 3, characterised in that the recesses are configured as flats parallel to the axis of the closing element.

5. Delivery valve according to Claim 1 to 3, characterised in that at least one of the recesses is configured with a passage cross-section which increases in the direction of the pump working space.

6. Delivery valve according to Claim 5, characterised in that at least one of the recesses has a stepped configuration with a passage cross-section increasing in the direction of the pump working space.

## Revendications

1. Soupape de refoulement destinée à être installée sur une canalisation de refoulement (7, 7') entre une chambre de travail d'une pompe d'injection de carburant et un point d'injection de carburant (8) sur un moteur à combustion interne alimenté par la pompe d'injection de carburant, soupape de refoulement comportant un corps de siège de soupape (14) muni d'un siège de soupape (19) et qui comporte un canal de passage (20) dans lequel est guidé un organe de fermeture (21) de la soupape de refoulement (1), qui comporte une surface d'étanchement (25), dans laquelle il est pressé, dans la position de fermeture de la soupape de refoulement, sur le siège de soupape (19) se raccordant au canal de passage (20) par un ressort de pression (26) prenant un appui fixe, dans une chambre de ressort (28) se situant sur le côté opposé à la chambre de travail de la pompe de l'organe de fermeture, lequel a, en outre, un bandeau (135) qui est susceptible de se déplacer de façon étanche dans le canal de passage (20), et est plongé dans ce canal lorsque l'organe de fermeture se trouve dans sa position de fermeture, tandis que lors de l'ouverture de la soupape de refoulement, il émerge côté chambre de ressort hors du canal de passage (120), tandis qu'il est prévu une partie de guidage, se raccordant directement côté chambre de travail de la pompe, au bandeau (135), avec un diamètre adapté au diamètre du canal de passage et à la périphérie de laquelle se trouve plusieurs évidements (38) uniformément répartis et s'étendant sur toute la longueur de cette partie de guidage, et qui forment avec la paroi du canal de passage (20) une section transversale de passage, tandis que ces évidements forment conjointement avec une arête de sortie (22), limitant le canal de passage (20) côté chambre de ressort, une section transversale de liaison entre la chambre de travail de la pompe et la canalisation de refoulement (7), soupape de refoulement caractérisée en ce que les évidements (138) comportent chacun une section transversale de passage de même grandeur, tandis que la partie de guidage est réalisée en tant que bandeau de commande (36) et que la section transversale de passage des évidements est à peu près aussi grande que la section transversale de la canalisation de refoulement (7) et en ce que l'effort de rappel conjointement avec la section transversale de passage totale est modulé de façon qu'avec un taux de refoulement de carburant croissant, la section transversale de liaison est agrandie par déplacement de l'organe de fermeture (121) contre l'action du ressort de pression (26), tandis que la section transversale de liaison est toujours inférieure au maximum égal à la section transversale de passage totale.

2. Soupape de refoulement selon la revendication 1, caractérisée en ce que pour un taux de refoulement maximum de la pompe d'injection de carburant, une partie du bandeau de commande et la longueur de l'évidement (138) restent toujours dans le canal de passage (120).

3. Soupape de refoulement selon une des précédentes revendications 1 ou 2, caractérisée en ce que l'organe de fermeture comporte, côté chambre de ressort, une tête (124) sur laquelle est réalisée une surface d'étanchement (25) s'étendant de préférence sous forme de cône et qui est susceptible d'être amenée par le ressort de pression (26) en application sur un siège de soupape (19) conformé de façon correspondante côté chambre de ressort, à la sortie du canal de passage (120), tandis que sur une partie de l'organe de fermeture se raccordant à la surface d'étanchement (25), et plongeant dans le canal de passage (120), est réalisé le bandeau de ré-aspiration (135), et en ce qu'au bandeau de ré-aspiration se raccorde, côté chambre de travail de la pompe, une partie de guidage (131) comportant des évidements (138) s'étendant en direction axiale du canal de passage (120) sur la surface enveloppe de l'organe de fermeture (121) et entre lesquels sont ménagés des nervures de guidage (134).

4. Soupape de refoulement selon l'une des revendications 1 à 3, caractérisée en ce que les évidements sont réalisés sous la forme de coupes par meulage parallèles à l'axe de l'organe de fermeture.

5. Soupape de refoulement selon l'une des revendications 1 à 3, caractérisée en ce qu'au moins un des évidements est réalisé avec une section transversale de passage croissant en direction de la chambre de travail de la pompe.

6. Soupape de refoulement selon la revendication 5, caractérisée en ce qu'au moins un des évidements est étagé avec une section transversale de passage croissant en direction de la chambre de travail de la pompe.
